(19) Europäisches Patentamt
European Patent Office
Office européen des brevets

(11) **EP 4 207 396 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
*H01M 8/023* (2016.01)     *H01M 8/10* (2016.01)
*H01M 8/1004* (2016.01)     *H01M 8/1006* (2016.01)

(21) Application number: **21861533.4**

(52) Cooperative Patent Classification (CPC):
**H01M 8/023; H01M 8/10; H01M 8/1004;
H01M 8/1006;** Y02E 60/50

(22) Date of filing: **24.08.2021**

(86) International application number:
**PCT/JP2021/030925**

(87) International publication number:
**WO 2022/045108 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2020  JP 2020144055**

(71) Applicants:
• **KABUSHIKI KAISHA TOSHIBA**
**Minato-ku**
**Tokyo**
**105-0023 (JP)**

• **Toshiba Energy Systems & Solutions
Corporation
Saiwai-ku
Kawasaki-shi
Kanagawa 2120013 (JP)**

(72) Inventor: **SHIMOTORI Soichiro**
**Kawasaki-shi, Kanagawa 212-0013 (JP)**

(74) Representative: **Hoffmann Eitle
Patent- und Rechtsanwälte PartmbB
Arabellastraße 30
81925 München (DE)**

(54) **SOLID POLYMER ELECTROLYTE FUEL CELL STACK**

(57)     A fuel cell stack constitutes a stack by stacking a plurality of basic components, the basic component including: a unit cell constituted by disposing an anode catalyst layer on one surface of a polymer electrolyte membrane, disposing a cathode catalyst layer on the other surface thereof, and disposing respective gas diffusion layers in contact with the anode catalyst layer and the cathode catalyst layer; and a separator disposed in contact with each of the gas diffusion layers, provided with a fuel gas flow channel or an oxidant gas flow channel, in which the polymer electrolyte membrane, the anode catalyst layer, and the cathode catalyst layer are formed in a trapezoidal wave shape or a rectangular wave shape having a repeating uneven shape in a thickness direction in a fixed period.

FIG.1

EP 4 207 396 A1

## Description

FIELD

Embodiments disclosed herein relate to a polymer electrolyte fuel cell stack.

BACKGROUND

A fuel cell stack using a polymer electrolyte membrane having proton conductivity as an electrolyte is constituted by constituting a single cell (unit cell) by disposing electrically conductive separators each provided with a gas flow channel on both sides of a membrane electrode assembly (MEA) in which an electrolyte membrane is sandwiched by an anode electrode and a cathode electrode, and stacking a plurality of single cells.

In general, the polymer electrolyte membrane, the anode electrode, and the cathode electrode constituting the membrane electrode assembly (MEA) are all stacked in a flat-plate shape, that is, in a sheet shape, and its effective area is specified by an effective area of the anode electrode and the cathode electrode. Performances, that is, a cell voltage and an electric current, per unit area in the effective area are constant in a material having the same composition, and to increase a fuel cell output power, an attempt has been made to select cell materials having higher activity, lower electrical resistance, and more excellent gas diffusibility to improve the performances per unit area.

Regarding a method for improving the performances per unit area, Patent Document 1 proposes a structure in which a substantial effective area is increased by providing wavy unevenness on an electrolyte membrane surface and a reaction membrane.

PRIOR ART DOCUMENT

PATENT DOCUMENT

Patent Document 1: Patent Publication No. 2831061

SUMMARY OF THE INVENTION

PROBLEMS TO BE SOLVED BY THE INVENTION

The above-described conventional technique has succeeded in, by providing the wavy unevenness on the electrolyte membrane surface and the reaction membrane, increasing a contact area, that is, the substantial effective area to improve the performances. However, a level of the improvement is limited to an increase of 50% in limiting current density as compared with a flat surface, which has left a problem of failing to greatly improve the performances.

The present invention has been made to solve the above-described problem, and it is an object to provide a polymer electrolyte fuel cell stack being capable of greatly improving the performances per unit projected area, and being simple and low-cost.

MEANS FOR SOLVING THE PROBLEMS

A polymer electrolyte fuel cell stack of an embodiment constitutes a stack by stacking a plurality of basic components, the basic component including: a unit cell constituted by disposing an anode catalyst layer including an anode catalyst having hydrogen-oxidation ability on one surface of a polymer electrolyte membrane, disposing a cathode catalyst layer including a cathode catalyst having oxidation-reduction ability on the other surface of the polymer electrolyte membrane, and disposing respective gas diffusion layers in contact with the anode catalyst layer and the cathode catalyst layer; and a separator disposed in contact with each of the gas diffusion layers, provided with a fuel gas flow channel or an oxidant gas flow channel, and composed of an electrically conductive material, in which the polymer electrolyte membrane, the anode catalyst layer, and the cathode catalyst layer are formed in a trapezoidal wave shape or a rectangular wave shape having a repeating uneven shape in a thickness direction in a fixed period.

BRIEF DESCRIPTION OF THE DRAWINGS

[Fig. 1] a view schematically illustrating a schematic configuration of a polymer electrolyte fuel cell stack of an embodiment.

[Fig. 2] a view illustrating a configuration of an A-A' cross section of the polymer electrolyte fuel cell stack in Fig. 1.
[Fig. 3] an enlarged view illustrating the configuration of the A-A' cross section of the polymer electrolyte fuel cell stack in Fig. 1.
[Fig. 4] an enlarged view illustrating a configuration of an A-A' cross section of a polymer electrolyte fuel cell stack in Examples 2.

DETAILED DESCRIPTION

A polymer electrolyte fuel cell stack according to an embodiment will be hereinafter described in reference to the drawings.

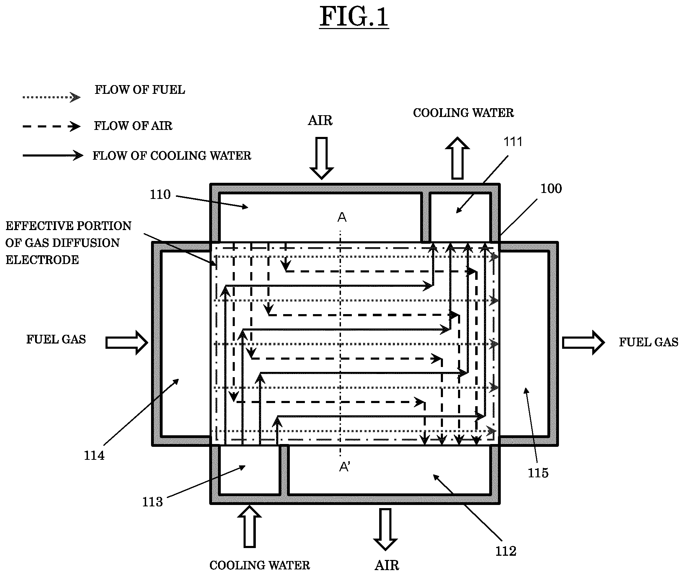

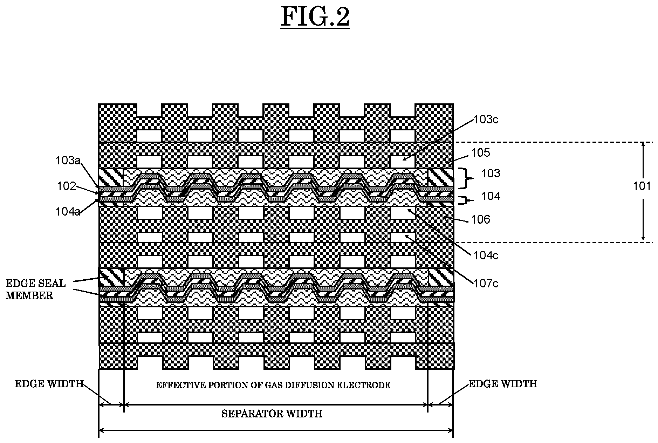

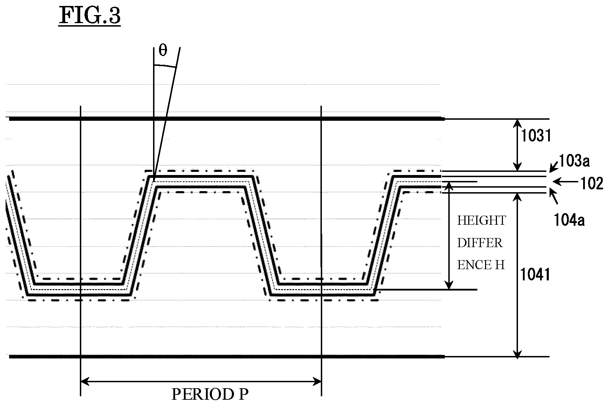

Fig. 1 schematically illustrates a schematic configuration of a polymer electrolyte fuel cell stack 100 of the embodiment, Fig. 2 illustrates a configuration of an A-A' cross section of the polymer electrolyte fuel cell stack 100 in Fig. 1, and Fig. 3 illustrates the enlarged configuration of the A-A' cross section in Fig. 1.

As illustrated in Fig. 2, a unit cell (single cell) 101 is constituted by a membrane-electrode assembly (MEA) constituted of a polymer electrolyte membrane 102, an anode electrode 103, and a cathode electrode 104, a fuel gas flow channel-attached separator 105, and an oxidant gas flow channel-attached separator 106.

In one surface of the fuel gas flow channel-attached separator 105, a fuel gas flow channel 103c is provided, and its end portion is open on a side surface of the fuel gas flow channel-attached separator 105. In one surface of the oxidant gas flow channel-attached separator 106, an oxidant gas flow channel 104c is provided, and a cooling water flow channel 107c is provided in the other surface thereof, and their end portions are open on a side surface of the oxidant gas flow channel-attached separator 106.

A plurality of the unit cells (single cells) 101 are stacked to constitute a stack. As illustrated in Fig. 1, on side surfaces of the stack, an air (oxidant gas) inlet-cooling water outlet manifold having an air (oxidant gas) inlet manifold 110 and a cooling water outlet manifold 111, an air (oxidant gas) outlet-cooling water inlet manifold having an air (oxidant gas) outlet manifold 112 and a cooling water inlet manifold 113, a fuel inlet manifold 114, and a fuel outlet manifold 115 are provided. Further, they communicate with the air (oxidant gas) flow channel, the fuel gas flow channel, and the cooling water flow channel, supply and discharge fuel and air (oxidant gas) necessary for reaction to and from the membrane-electrode assembly (MEA), and supply cooling water at a predetermined flow rate to remove heat generated with the reaction.

As illustrated in Fig. 2 and Fig. 3, the membrane-electrode assembly (MEA) is constituted by disposing an anode catalyst layer 103a and a cathode catalyst layer 104a on both sides of the polymer electrolyte membrane 102, and disposing an anode gas diffusion layer 1031 and a cathode gas diffusion layer 1041 on further outer sides thereof. The polymer electrolyte membrane 102 requires ion conductivity and a gas barrier property, and is extended to the same size as that of the fuel gas flow channel-attached separator 105 and the oxidant gas flow channel-attached separator 106 for prevention of mixture of a reaction gas.

The gas diffusion layers have the next smaller size than the fuel gas flow channel-attached separator 105, the oxidant gas flow channel-attached separator 106, and the polymer electrolyte membrane 102, and an edge seal member 109 sealing the reaction gas is disposed around them. The edge seal member 109 is disposed further outside than grooves in the end portions of the gas flow channels.

In this embodiment, the polymer electrolyte membrane 102, the anode catalyst layer 103a, and the cathode catalyst layer 104a are provided with a height difference in a cell thickness direction. That is, as illustrated in Fig. 3, they are formed in an uneven shape in a fixed period P to have a configuration provided with a height difference H when a cross section of the membrane-electrode assembly (MEA) of the fuel cell stack is seen. Further, at an unevenness turning portion, an angle $\theta$ of an inclined plane to a perpendicular direction (for example, approximately 15°) is provided. Accordingly, a cross section of the polymer electrolyte membrane 102, the anode catalyst layer 103a, and the cathode catalyst layer 104a is formed in a trapezoidal wave shape in a thickness direction.

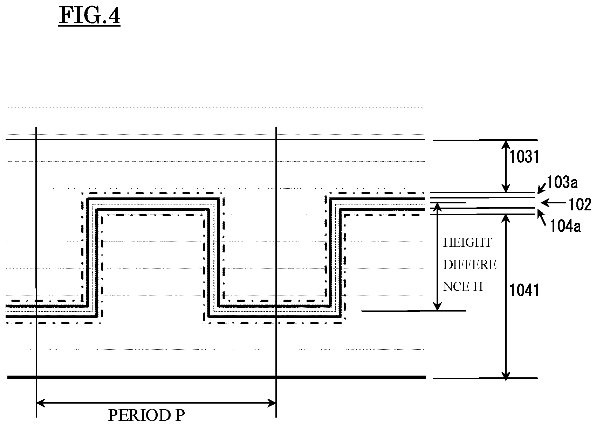

However, the above-described angle $\theta$ need not be necessarily provided, or the angle $\theta$ may be set to 0°. In this case, as illustrated in Fig. 4, a cross section of the polymer electrolyte membrane 102, the anode catalyst layer 103a, and the cathode catalyst layer 104a has an angle of 90° at the unevenness turning portion to be formed in a rectangular wave shape in the thickness direction. As described above, for either the trapezoidal wave shape or the rectangular wave shape, it is preferable that the height difference H is set to be larger than 1/2 of the period P (a width of a portion at a fixed height in Fig. 4), that is, is set to

$$H > P/2.$$

This allows a later-described effective area to be increased.

Here, in this embodiment, as illustrated in Fig. 2, the configuration such that a period of a groove shape of the oxidant gas flow channel 104c and the fuel gas flow channel 103c is the same as a period of the uneven shape formed by the polymer electrolyte membrane 102, the anode catalyst layer 103a, and the cathode catalyst layer 104a in the membrane-electrode assembly (MEA), and the anode catalyst layer 103a is close to a groove portion of the fuel gas flow channel 103c, and the cathode catalyst layer 104a is close to a bank portion of the oxidant gas flow channel 104c is employed.

In addition, in this embodiment, the fuel gas flow channel-attached separator 105 and the oxidant gas flow channel-attached separator 106 are composed of a conductive porous material. In this case, setting a cooling water pressure in the cooling water flow channel 107c to be lower than pressures of a fuel gas in the fuel gas flow channel 103c and an oxidant gas in the oxidant gas flow channel 104c allows water generated by a fuel cell reaction to be discharged through the separator into cooling water flowing through the cooling water flow channel 107c. Moreover, the configuration such that the cathode catalyst layer 104a is close to the bank portion of the oxidant gas flow channel 104c allows water accumulated in the cathode gas diffusion layer in contact with the bank portion to be discharged rapidly, which accelerates the reaction in the groove portion to obtain the effect of improving output as a whole. Note that it is also acceptable that the anode catalyst layer 103a is close to a bank portion of the fuel gas flow channel 103c, and the cathode catalyst layer 104a is close to a groove portion of the oxidant gas flow channel 104c.

(Examples 1)

Table 1 presents a comparison of dimensions of catalyst layers between a conventional fuel cell stack and fuel cell stacks in Example 1a and Example 1b. Note that in each of Example 1a and Example 1b, a shape of the polymer electrolyte membrane 102, the anode catalyst layer 103a, and the cathode catalyst layer 104a is the trapezoidal wave shape illustrated in Fig. 3.

[Table 1]

|  | Conventional example | Example 1a | Example 1b |
| --- | --- | --- | --- |
| Separator width | 140 mm | 140 mm | 140 mm |
| Separator length | 200 mm | 200 mm | 200 mm |
| Edge seal width | 10 mm | 10 mm | 10 mm |
| Electrolyte membrane • catalyst layer period P | - | 0.5 mm | 0.15 mm |
| Electrolyte membrane • catalyst layer height difference H | 0 mm | 0.2 mm | 0.1 mm |
| Electrolyte membrane • catalyst layer angle θ | - | 15 degrees | 15 degrees |
| Catalyst layer effective width | 120 mm | 193 mm | 242 mm |
| Catalyst layer length | 180 mm | 180 mm | 180 |
| Effective area | 216 cm$^2$ | 348 cm$^2$ | 436 cm$^2$ |
| Effective area conventional ratio | 1 | 1.6 | 2.0 |

In the conventional fuel cell stack, an electrolyte membrane and catalyst layers were formed in a flat-plate shape, and a catalyst effective area was 216 cm$^2$. In the fuel cell stack in Example 1a, by providing unevenness in a period P = 0.5 mm, in a height difference H = 0.2 mm, and at an angle θ = 15 degrees, a width of the catalyst layers was extended to increase the effective area by 132 cm$^2$ (60%).

Moreover, in Example 1b, by providing unevenness in a period P = 0.15 mm, in a height difference H = 0.1 mm, and at an angle θ = 15 degrees, a width of the catalyst layers was extended to increase the effective area by 220 cm$^2$ (100%) (this case results in H > P/2.). The above configuration allows the electrolyte membrane and the anode and cathode catalyst layers to be periodically provided with the height difference in the cell thickness direction, that is, the effective portion for reaction to be extended, which improves an output of the fuel cell per unit volume.

(Examples 2)

Next, Examples 2 will be described. Fig. 4 illustrates an enlarged configuration, similar to that in Fig. 3, of a cross section of a membrane-electrode assembly (MEA) of a fuel cell stack. As illustrated in Fig. 4, in each of Examples 2, similarly to Examples 1, the polymer electrolyte membrane 102, the anode catalyst layer 103a, and the cathode catalyst layer 104a in the membrane-electrode assembly (MEA) are provided with a height difference in a cell thickness direction. In this case, they are formed in an uneven shape in a fixed period P to be provided with the height difference H. This corresponds to the case of setting an angle $\theta$ of an inclined plane to a perpendicular direction to 0 degrees at the previously-described unevenness turning portion. That is, the rectangular wave shape is formed in this case.

Table 2 presents a comparison of dimensions of the catalyst layers between the conventional fuel cell stack and the fuel cell stacks according to Examples 2.

[Table 2]

|  | Conventional example | Example 2a | Example 2b |
| --- | --- | --- | --- |
| Separator width | 140 mm | 140 mm | 140 mm |
| Separator length | 200 mm | 200 mm | 200 mm |
| Edge seal width | 10 mm | 10 mm | 10 mm |
| Electrolyte membrane • catalyst layer period P | - | 0.5 mm | 0.15 mm |
| Electrolyte membrane • catalyst layer height difference H | 0 mm | 0.2 mm | 0.1 mm |
| Catalyst layer effective width | 120 mm | 216 mm | 280 mm |
| Catalyst layer length | 180 mm | 180 mm | 180 mm |
| Effective area | 216 cm$^2$ | 388 cm$^2$ | 504 cm$^2$ |
| Effective area conventional ratio | 1 | 1.8 | 2.3 |

In the conventional fuel cell stack, the electrolyte membrane and the catalyst layers were formed in the flat-plate shape, and the catalyst effective area was 216 cm$^2$. In Example 2a, by providing unevenness in a period P = 0.5 mm and in a height difference H = 0.2 mm, a width of the catalyst layers was extended to increase the effective area by 172 cm$^2$ (80%).

Moreover, in Example 2b, by providing unevenness in a period P = 0.15 mm and in a height difference H = 0.1 mm, a width of the catalyst layers was extended to increase the effective area by 288 cm$^2$ (130%) (this case results in H > P/2.). As described above, also in Examples 2, similarly to the cases of Examples 1, periodically providing the electrolyte membrane and the anode and cathode catalyst layers with the height difference in the cell thickness direction allows the effective portion for reaction to be extended, which improves the output of the fuel cell per unit volume.

While certain embodiments of the present invention have been described above, these embodiments have been presented by way of example only, and are not intended to limit the scope of the inventions. Indeed, the novel embodiments described herein may be embodied in a variety of other forms; furthermore, various omissions, substitutions, and changes in the form of the embodimens described herein may be made without departing from the spirit of the inventions. The accompanying claims and their equivalents are intended to cover such forms or modifications as would fall within the scope and spirit of the invention.

EXPLANATION OF REFERENCE NUMERALS

100 ...... fuel cell stack, 101 ...... unit cell, 102 ...... polymer electrolyte membrane, 103 ...... anode electrode, 103a ...... anode catalyst layer, 103c ...... fuel gas flow channel, 104 ...... cathode electrode, 104a ...... cathode catalyst layer, 104c ...... oxidant gas flow channel, 105 ...... fuel gas flow channel-attached separator, 106 ...... oxidant gas flow channel-attached separator, 107c ...... cooling water flow channel, 109 ...... edge seal member, 110 ...... air inlet manifold, 111 ...... cooling water outlet manifold, 112 ...... air outlet manifold, 113 ...... cooling water inlet manifold, 114 ...... fuel inlet manifold, 115 ...... fuel outlet manifold, 1031 ...... anode gas diffusion layer, 1041 ...... cathode gas diffusion layer.

**Claims**

1. A fuel cell stack constituting a stack by stacking a plurality of basic components, the basic component comprising:

a unit cell constituted by disposing an anode catalyst layer including an anode catalyst having hydrogen-oxidation ability on one surface of a polymer electrolyte membrane, disposing a cathode catalyst layer including a cathode catalyst having oxidation-reduction ability on the other surface of the polymer electrolyte membrane, and disposing respective gas diffusion layers in contact with the anode catalyst layer and the cathode catalyst layer; and a separator disposed in contact with each of the gas diffusion layers, provided with a fuel gas flow channel or an oxidant gas flow channel, and composed of an electrically conductive material,
the polymer electrolyte membrane, the anode catalyst layer, and the cathode catalyst layer being formed in a trapezoidal wave shape or a rectangular wave shape having a repeating uneven shape in a thickness direction in a fixed period.

2. The fuel cell stack according to claim 1,
wherein when the period is set as P, and a height difference in the thickness direction is set as H, the trapezoidal wave shape or the rectangular wave shape is represented by

$$H > P/2.$$

3. The fuel cell stack according to claim 1 or 2,

wherein the period of the trapezoidal wave shape or the rectangular wave shape is
a same as a period of a groove shape of the fuel gas flow channel or the oxidant gas flow channel, and the polymer electrolyte membrane, the anode catalyst layer, and the cathode catalyst layer are close to an opening of a groove of the fuel gas flow channel or the oxidant gas flow channel.

4. The fuel cell stack according to any one of claims 1 to 3, wherein the separator is composed of a conductive porous material.

# FIG.1

FLOW OF FUEL

FLOW OF AIR

FLOW OF COOLING WATER

AIR

COOLING WATER

111

110

100

EFFECTIVE PORTION
OF GAS DIFFUSION
ELECTRODE

A

FUEL GAS

FUEL GAS

114

A'

115

113

112

COOLING WATER

AIR

EP 4 207 396 A1

# FIG.2

8

FIG.3

θ

1031

103a

102

104a

HEIGHT
DIFFER
ENCE H

1041

PERIOD P

# FIG.4

1031

103a

102

104a

HEIGHT
DIFFERE
NCE H

1041

PERIOD P

## INTERNATIONAL SEARCH REPORT

| International application No. |
| --- |
| **PCT/JP2021/030925** |

**A.    CLASSIFICATION OF SUBJECT MATTER**

*H01M 8/023*(2016.01)i; *H01M 8/10*(2016.01)i; *H01M 8/1004*(2016.01)i; *H01M 8/1006*(2016.01)i
FI:    H01M8/1004; H01M8/023; H01M8/10 101; H01M8/1006

According to International Patent Classification (IPC) or to both national classification and IPC

**B.    FIELDS SEARCHED**

Minimum documentation searched (classification system followed by classification symbols)

H01M8/023; H01M8/10; H01M8/1004; H01M8/1006

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2007-109417 A (TOPPAN PRINTING CO., LTD.) 26 April 2007 (2007-04-26) paragraphs [0027]-[0055], fig. 1 | 1-2 |
| Y | paragraphs [0027]-[0055], fig. 1 | 4 |
| A | paragraphs [0027]-[0055], fig. 1 | 3 |
| X | JP 2007-087860 A (EQUOS RESEARCH CO., LTD.) 05 April 2007 (2007-04-05) paragraphs [0037]-[0081], fig. 13-20 | 1-2 |
| Y | paragraphs [0037]-[0081], fig. 13-20 | 4 |
| A | paragraphs [0037]-[0081], fig. 13-20 | 3 |
| Y | JP 2013-191433 A (TOSHIBA CORP.) 26 September 2013 (2013-09-26) paragraph [0042] | 4 |
| Y | JP 2014-225424 A (ASAHI GLASS CO., LTD.) 04 December 2014 (2014-12-04) paragraphs [0018]-[0020], [0075] | 4 |

☐ Further documents are listed in the continuation of Box C.          ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **29 October 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/030925**

| Patent document cited in search report | | | Publication date (day/month/year) | Patent family member(s) | Publication date (day/month/year) |
|---|---|---|---|---|---|
| JP | 2007-109417 | A | 26 April 2007 | (Family: none) | |
| JP | 2007-087860 | A | 05 April 2007 | (Family: none) | |
| JP | 2013-191433 | A | 26 September 2013 | (Family: none) | |
| JP | 2014-225424 | A | 04 December 2014 | US 2015/0044593 A1 paragraphs [0038]-[0042], [0136]-[0137] | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2831061 A